# EUROPEAN PATENT SPECIFICATION

(11) **EP 3 552 175 B1**
(45) Date of publication and mention of the grant of the patent: **02.06.2021**
(21) Application number: 16923312.9
(22) Date of filing: 07.12.2016
(51) Int. Cl.: G06Q 50/00, G06Q 50/10, G06Q 50/30, G06F 9/44

(54) **PROVIDING STUB APPLICATIONS FOR A SOCIAL NETWORKING SYSTEM**
BEREITSTELLUNG VON STUB-ANWENDUNGEN FÜR EIN SOZIALES NETZWERKSYSTEM
FOURNITURE D'APPLICATIONS D'ÉLÉMENT DE REMPLACEMENT POUR UN SYSTÈME DE RÉSEAU SOCIAL

(30) Priority: 06.12.2016 US 201615371153
(43) Date of publication of application: 16.10.2019
(73) Proprietor: Facebook, Inc., Menlo Park, CA 94025 (US)
(72) Inventor: RAGHAVAN, Srilatha P., Menlo Park, California 94025 (US)
(74) Representative: Murgitroyd & Company
(86) International application number: PCT/US2016/065448
(87) International publication number: WO 2018/106236

(56) References cited:
- WO-A1-2009/099457
- KR-A- 20120 139 454
- US-A1- 2006 073 820
- US-A1- 2016 085 763
- US-A1- 2016 301 700
- US-B1- 9 098 366
- US-B1- 9 483 253

## Description

### FIELD OF THE INVENTION

The present technology relates to the field of social networks. More particularly, the present technology relates to techniques for providing applications associated with social networking systems.

### BACKGROUND

Today, people often utilize computing devices (or systems) for a wide variety of purposes. Users can use their computing devices, for example, to interact with one another, create content, share content, and view content. In some cases, a user can utilize his or her computing device to access a social networking system (or service). The user can provide, post, share, and access various content items, such as status updates, images, videos, articles, and links, via the social networking system.

A social networking system may provide user profiles for various users through which users may add connections, such as friends or contacts, or provide content items. A user (or entity) of the social networking system can post or publish a content item, which can be provided or presented on a profile page, such as on the user's timeline or on another user's timeline. In addition, a content item can be provided or presented through a feed provided by the social networking system for the user or for another user to view and access. Various functionality of the social networking system can be provided to a user through an app (application) developed by the social networking system that runs on a user device of the user. US 2016/085763 A1 discloses a method of application management in which an application management server may maintain multiple versioons of the requested applications, and the appropriate version of the application may be retrieved based on provided preferences in the request. WO 2009/099457 A1 discloses a method to securely load a management client from a stub client to facilitate remote device management. US 9,098,366 B1 discloses a mobile communication device which comprises a processor, a memory, a plurality of stub applications comprising updateable version numbers, and a widget stored in the memory that, when executed by the processor, configures the processor to: determine a plurality of the stub applications to present, present the stub applications on a display of the mobile communication device, and elicit, in response to selection of a first stub application, retrieval and installation of a first full application in place of the first stub application. US 2016/301700 A1 discloses a method in which a request for a software application may be received at an application store, and subsequently the software application may be configured, at the application store, based on a single sign-on credential, and the configured software application then may be provided, by the application store, to at least one recipient device associated with the single sign-on credential.

### SUMMARY

According to a first aspect of the present invention there is provided a computer-implemented method according to claim 1. Various embodiments of the present disclosure can include systems, methods, and non-transitory computer readable media configured to connect to a server associated with an application in response to access of a stub application associated with the application, where the stub application is installed on a mobile device. Information associated with the mobile device is sent to the server. A version of a plurality of versions of the application to install on the mobile device is obtained from the server.

In some embodiments, the obtained version of the application can be installed on the mobile device.

In certain embodiments, the stub application can be deleted subsequent to the installing the obtained version of the application on the mobile device.

In an embodiment, the obtained version of the application is a binary file.

The information associated with the mobile device includes information relating to one or more of: a memory, a processor, a display, a storage, a network connection, a language, a geographical region, a model, or a manufacturer.

In certain embodiments, the information associated with the mobile device is obtained based on an application programming interface (API).

In an embodiment, the information associated with the mobile device is obtained from an operating system (OS) installed on the mobile device.

In some embodiments, the stub application is represented as an icon in a user interface displayed on the mobile device.

In certain embodiments, a version of a plurality of versions of a second application to install on the mobile device can be obtained from the server, wherein the stub application is associated with the second application.

In an embodiment, the application is associated with a social networking system.

It should be appreciated that many other features, applications, embodiments, and/or variations of the disclosed technology will be apparent from the accompanying drawings and from the following detailed description. Additional and/or alternative implementations of the structures, systems, non-transitory computer readable media, and methods described herein can be employed without departing from the principles of the disclosed technology.

### BRIEF DESCRIPTION OF THE DRAWINGS

**FIGURE 1** illustrates an example system including an example universal stub application module configured to provide a stub application associated with a social networking system, according to an embodiment of the present disclosure.
**FIGURE 2** illustrates an example system including an example universal stub application server module configured to determine a version of an application associated with a social networking system to install on a device, according to an embodiment of the present disclosure.
**FIGURE 3A** illustrates an example scenario for providing universal stub applications associated with a social networking system, according to an embodiment of the present disclosure.
**FIGURE 3B** illustrates an example user interface for providing universal stub applications associated with a social networking system, according to an embodiment of the present disclosure.
**FIGURE 4** illustrates an example first method for providing universal stub applications associated with a social networking system, according to an embodiment of the present disclosure.
**FIGURE 5** illustrates an example second method for providing universal stub applications associated with a social networking system, according to an embodiment of the present disclosure.
**FIGURE 6** illustrates a network diagram of an example system that can be utilized in various scenarios, according to an embodiment of the present disclosure.
**FIGURE 7** illustrates an example of a computer system that can be utilized in various scenarios, according to an embodiment of the present disclosure.

The figures depict various embodiments of the disclosed technology for purposes of illustration only, wherein the figures use like reference numerals to identify like elements. One skilled in the art will readily recognize from the following discussion that alternative embodiments of the structures and methods illustrated in the figures can be employed without departing from the principles of the disclosed technology described herein.

### DETAILED DESCRIPTION

### PROVIDING STUB APPLICATIONS FOR A SOCIAL NETWORKING SYSTEM

People use computing devices (or systems) for a wide variety of purposes. Computing devices can provide different kinds of functionality. Users can utilize their computing devices to produce information, access information, and share information. In some cases, users can utilize computing devices to interact or engage with a conventional social networking system (e.g., a social networking service, a social network, etc.). A social networking system may provide user profiles for various users through which users may add connections, such as friends, or publish content items. In one example, a user (or entity) of the social networking system can post a content item, which can be presented on a profile page of the user. In addition, a content item can be presented through a feed provided by the social networking system for the user or for another user to view and access. An application (or "app") associated with the social networking system can be installed on a device of a user. Various functionality of the social networking system can be provided to the user through the application. Examples of devices can include mobile devices, such as mobile phones, tablets, etc.

One or more applications may be preinstalled or preloaded by device manufacturers on devices prior to purchase of the devices by users. In some cases, a stub application for an application can be preinstalled on a device. A stub application can act as a placeholder for an application. For example, the stub application can be recognized by an operating system of the device as the application or as being associated with the application. When the stub application is accessed by a user, the associated application can be installed on the device. Stub applications can be used to provide easy access to applications.

In some cases, an application associated with a social networking system ("application") can have multiple versions that are available to be installed on a device. For example, an application can have a full version as well as a light version that requires fewer resources than the full version and/or provides streamed functionality compared to the full version. Conventional approaches specifically arising in the realm of computer technology can provide a stub application for each version of an application and preinstall a stub application for a particular version of an application on a device. For example, a stub application for a full version of an application can be preinstalled on a device on which the full version of the application should be installed. Similarly, a stub application for a light version of the application can be preinstalled on a device on which the light version of the application should be installed. However, an incorrect stub application can be preinstalled on a device, which can lead to installing an incorrect version of the application on the device. Installing an incorrect version of the application can lead to low performance and an unsatisfactory user experience. In addition, criteria for installing a particular version of an application on a certain device can change dynamically. In such cases, it can be difficult to determine which stub application to preinstall on a device. Moreover, if many different versions are available for an application, managing individual stub applications for the different versions and criteria for the different versions can become cumbersome.

An improved approach rooted in computer technology can overcome the foregoing and other disadvantages associated with conventional approaches specifically arising in the realm of computer technology. Based on computer technology, the disclosed technology can provide a universal stub application for an application associated with a social networking system. For example, a single stub application can be provided for installing an appropriate version of an application when multiple versions of the application are available. The single stub application can be referred to as a universal or general stub application since the same stub application can be used to install different versions of the application. The universal stub application can be preinstalled on a device. When the universal stub application is accessed, the device can connect to a server associated with the social networking system and send relevant device information, such as information relating to memory, processors, display, etc. The server can determine which version of the application to install, and the determined version of the application can be installed on the device. The installation of the appropriate version of the application can appear seamless to a user. In certain embodiments, the universal stub application can be used to install appropriate versions of multiple applications associated with the social networking system. In such embodiments, a user can select which applications provided by the social networking system to install on the user's device, and the server can determine which version of each selected application to install on the user's device.

In this way, the disclosed technology can ensure that a correct version of an application associated with the social networking system can be installed on a device. Reliable installation of appropriate versions of applications in accordance with the disclosed technology can provide enhanced performance and optimal user experience. The disclosed technology can also provide a convenient way of installing appropriate versions of multiple applications associated with the social networking system. Applications associated with the social networking system are provided merely as examples in discussion of the disclosed technology herein. The disclosed technology can also be applicable to installing appropriate versions of applications associated with other systems or entities apart from a social networking system.

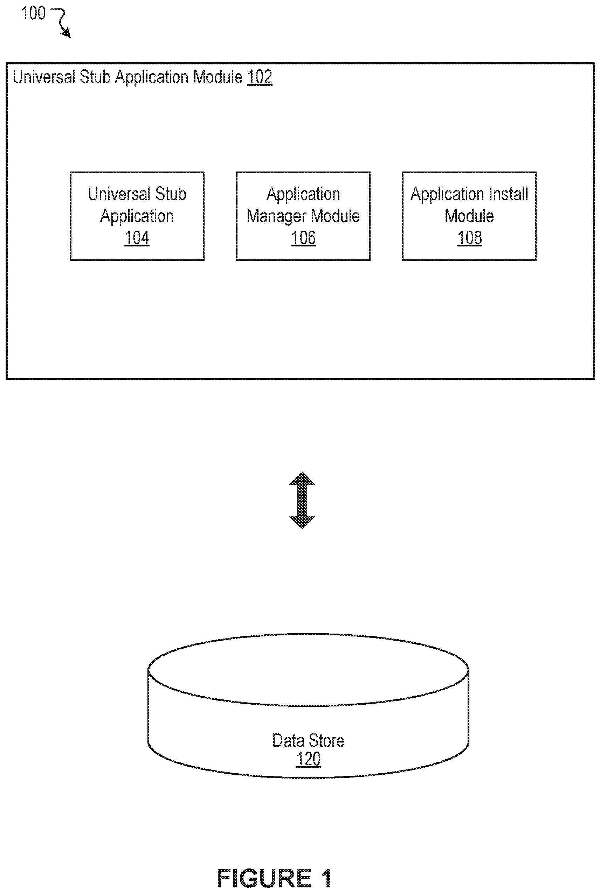

**FIGURE 1** illustrates an example system 100 including an example universal stub application module 102 configured to provide a universal stub application associated with a system, such as a social networking system, according to an embodiment of the present disclosure. The universal stub application module 102 can include a universal stub application 104, an application manager module 106, and an application install module 108. In the example of FIGURE 1, the example system 100 can be implemented in a device of a user, such as a user device 610, and the universal stub application module 102 can be provided on the user device. For example, the universal stub application 104, the application manager module 106, and the application install module 108 can be preinstalled on the user device. In some instances, the example system 100 can include at least one data store 120. The components (e.g., modules, elements, steps, blocks, etc.) shown in this figure and all figures herein are exemplary only, and other implementations may include additional, fewer, integrated, or different components. Some components may not be shown so as not to obscure relevant details. In various embodiments, one or more of the functionalities described in connection with the universal stub application module 102 can be implemented in any suitable combinations.

The universal stub application 104 can act as a placeholder for an application associated with a system, such as a social networking system, to be installed on a device. As mentioned above, an application is described as being associated with a social networking system for illustrative purposes, and an application can be associated with any other system or entity. The universal stub application 104 can be preinstalled on the device. When the universal stub application 104 is accessed, the universal stub application 104 can initiate an installation of an appropriate version of the application on the device. The universal stub application 104 can communicate with the application manager module 106 to initiate the installation. For example, the universal stub application 104 can send an install request to the application manager module 106.

In some cases, legal requirements can mandate users to accept terms and conditions for an application prior to the application making a connection to a server associated with the application. However, if the application is preinstalled on a device, then the application may immediately make a connection to the server upon access of the application by a user. In such cases, a stub application for the application can be used in order to make sure that a connection to the server associated with the application is not made until the terms and conditions for the application are accepted by users. Since the application is not actually installed on a device when a stub application is preinstalled, use of the stub application can comply with legal requirements but still provide convenient access to the application by initiating installation of the application upon access of the stub application. As explained above, if multiple versions of the application are available, the universal stub application 104 can be provided to prevent installing of an incorrect stub application that can occur when separate stub applications are available for different versions of the application.

The application manager module 106 can manage various functionalities associated with the application. For example, the application manager module 106 can send a request to a server associated with a system, such as a social networking system, in order to install the application, check for updates for the application, install updates for the application, etc. When the application manager module 106 receives an install request from the universal stub application 104, the application manager module 106 can obtain information about the device that is relevant to determining an appropriate version of the application to install on the device. Device information can be sent to the server associated with the social networking system so that the server can determine the appropriate version of the application to install. In some embodiments, the server can specify which types of information to include in the device information after the application manager module 106 connects to the server. In certain embodiments, the device can have access to types of information to include in the device information prior to connecting to the server. For example, the universal stub application 104 or the application manager module 106 can specify the types of information to include in the device information. Many variations are possible.

Examples of device information can include information relating to memory, processors, display, storage, network connection capabilities, language, geographical region, model, manufacturer, etc. Information relating to memory can include an amount of random access memory (RAM) on the device. Information relating to processors can include a number of processors (e.g., a number of core processors), a speed of a processor (e.g., a speed of a central processing unit (CPU)), a type of processor, etc. Information relating to display can include a screen resolution. Information relating to storage can include an amount of storage available on the device. Information relating to network connection capabilities can include a type of network connection (e.g., 2G, 3G, 4G, etc.) supported by the device, a speed of network connection (e.g., 2G, 3G, 4G, etc.) of the device, etc. Information relating to language can include one or more languages associated with the device. Information relating to geographical region can include a geographical region associated with the device (e.g., country, state, city, etc.). Information relating to model can include a model of the device. Information relating to manufacturer can include a manufacturer of the device. Any combination of the above information can be sent to the server to determine the version of the application to install on the device. All examples herein are provided for illustrative purposes, and device information can include any other information that can be used to determine the version of the application to install on the device. For example, device information can include information relating to parameters associated with different versions of the application as explained below. In some embodiments, device information can include any information that can identify a type of a particular device. In some embodiments, device information can exclude any information that can identify the particular device. The application manager module 106 can obtain device information through an application programming interface (API). For example, the application manager module 106 can use API functions to obtain device information from an operating system (OS) of the device. In certain embodiments, information other than device information can also be sent to the server. As an example, information relating to markets or demographic characteristics associated with users can be sent to the server.

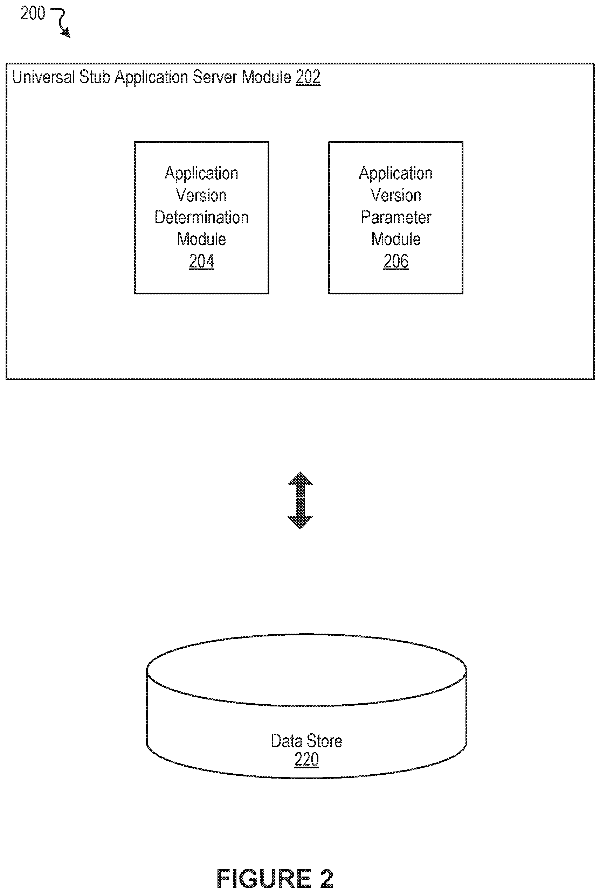

After obtaining relevant device information, the application manager module 106 can connect to the server associated with the social networking system and send the device information to the server. In some embodiments, the server associated with the social networking system can be implemented in a system 200 as described in FIGURE 2. The server can determine the version of the application to install on the device based on the received device information and communicate the version to install to the application manager module 106. The server can provide a binary file for the version of the application to install. The application manager module 106 can request the application install module 108 to install the determined version of the application.

The application install module 108 can install the determined version of the application. For example, the application install module 108 can install the determined version of the application using the binary file provided by the server. The application install module 108 can install the determined version of the application through an API. For example, the application install module 108 can use API functions associated with the OS of the device to install the application. After the installation of the determined version of the application is completed, the universal stub application 104 can be removed from the device. All examples herein are provided for illustrative purposes, and there can be many variations and other possibilities.

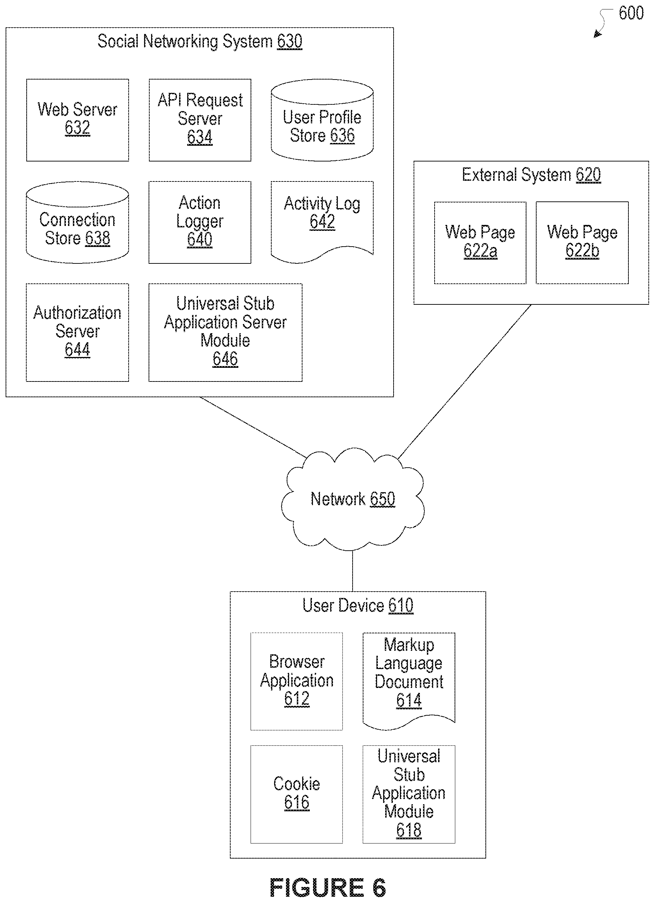

In some embodiments, the universal stub application module 102 can be implemented, in part or in whole, as software, hardware, or any combination thereof. In general, a module as discussed herein can be associated with software, hardware, or any combination thereof. In some implementations, one or more functions, tasks, and/or operations of modules can be carried out or performed by software routines, software processes, hardware, and/or any combination thereof. In some cases, the universal stub application module 102 can be, in part or in whole, implemented as software running on one or more computing devices or systems, such as on a server system or a client computing device. In some instances, the universal stub application module 102 can be, in part or in whole, implemented within or configured to operate in conjunction or be integrated with a social networking system (or service), such as a social networking system 630 of FIGURE 6. Likewise, in some instances, the universal stub application module 102 can be, in part or in whole, implemented within or configured to operate in conjunction or be integrated with a client computing device, such as the user device 610 of FIGURE 6. For example, the universal stub application module 102 can be implemented as or within a dedicated application (e.g., app), a program, or an applet running on a user computing device or client computing system. It should be understood that many variations are possible.

The data store 120 can be configured to store and maintain various types of data, such as the data relating to support of and operation of the universal stub application module 102. The data maintained by the data store 120 can include, for example, information relating to universal stub applications, application manager modules, application install modules, one or more devices (e.g., memory, processor, storage, network connection capabilities, etc.), applications, versions of applications, binary files associated with applications or versions of applications, etc. The data store 120 also can maintain other information associated with a social networking system. The information associated with the social networking system can include data about users, social connections, social interactions, locations, geo-fenced areas, maps, places, events, groups, posts, communications, content, account settings, privacy settings, and a social graph. The social graph can reflect all entities of the social networking system and their interactions. As shown in the example system 100, the universal stub application module 102 can be configured to communicate and/or operate with the data store 120. In some embodiments, the data store 120 can be a data store within a client computing device. In some embodiments, the data store 120 can be a data store of a server system in communication with the client computing device.

**FIGURE 2** illustrates an example system 200 including an example universal stub application server module 202 configured to determine a version of an application associated with a system, such as a social networking system, to install on a device, according to an embodiment of the present disclosure. The universal stub application server module 202 can include an application version determination module 204 and an application version parameter module 206. In the example of FIGURE 2, the example system 200 can be a social networking system. For example, the social networking system can be associated with the application. In some instances, the example system 200 can include at least one data store 220. The components (e.g., modules, elements, steps, blocks, etc.) shown in this figure and all figures herein are exemplary only, and other implementations may include additional, fewer, integrated, or different components. Some components may not be shown so as not to obscure relevant details. In various embodiments, one or more of the functionalities described in connection with the universal stub application server module 202 can be implemented in any suitable combinations.

The system 100 described in FIGURE 1 as implemented by a device of a user can connect to the system 200 in order to request installation of a version of an application associated with the social networking system. As described above, the device can send device information to the system 200, which can include relevant device information for determining an appropriate version of the application to install on the device. For example, the device information can include information relating to memory, processors, display, storage, network connection capabilities, language, geographical region, model, manufacturer, etc. In some embodiments, the system 200 can request certain types of information to include in the device information after the device connects to the system 200. In certain embodiments, the device can determine which types of information to include in the device information and send to the system 200 when connecting to the system 200.

The application version determination module 204 can determine a version of an application associated with a system, such as a social networking system, to install on a device. The application version determination module 204 can receive the device information sent by the device and determine the version of the application to install on the device based on the received device information. For example, the application version determination module 204 can refer to one or more parameters associated with different versions of the application that are specified and managed by the application version parameter module 206 as explained below. The application version determination module 204 can compare information included in the device information and the parameters associated with the different versions of the application. The application version determination module 204 can determine the version of the application to install based on the comparison. The application version determination module 204 can provide the determined version of the application to install to the device. For example, the application version determination module 204 can provide a binary file for the determined version.

The application version parameter module 206 can specify and manage one or more parameters for different versions of an application associated with a system, such as a social networking system. If there are multiple applications associated with the social networking system, the application version parameter module 206 can specify and manage parameters for different versions of each of the multiple applications. Each version of an application can have one or more parameters associated with it. Parameters associated with a version of the application can relate to memory, processors, display, storage, network connection capabilities, language, geographical region, model, manufacturer, etc. Parameters can relate to similar types of information as device information. Examples of parameters can include requirements relating to an amount of RAM, a number of processors (e.g., a number of core processors), a speed of a processor (e.g., a speed of a CPU), a type of processor, a screen resolution, an amount of storage available, a type of network connection (e.g., 2G, 3G, 4G, etc.), a speed of network connection (e.g., 2G, 3G, 4G, etc.), a language, a geographical region (e.g., country, state, city, etc.), a model, a manufacturer, etc. Any combination of the above examples of parameters can be used to determine the version of the application to install on the device. Types of information requested from a device can be based on parameters associated with different versions of the application.

One or more parameters associated with a version of the application can change dynamically. Values of the one or more parameters associated with the version of the application also can change dynamically. For example, the current parameters of the version of the application can include a parameter relating to a number of core processors and a parameter relating to CPU speed, and the parameters can be changed from these parameters to a parameter relating to an amount of RAM. As another example, a parameter associated with the version of the application can relate to an amount of RAM, and the value of the parameter can change from a first value to a second value. Many variations are possible.

In some embodiments, the universal stub application server module 202 can be implemented, in part or in whole, as software, hardware, or any combination thereof. In general, a module as discussed herein can be associated with software, hardware, or any combination thereof. In some implementations, one or more functions, tasks, and/or operations of modules can be carried out or performed by software routines, software processes, hardware, and/or any combination thereof. In some cases, the universal stub application server module 202 can be, in part or in whole, implemented as software running on one or more computing devices or systems, such as on a server system or a client computing device. In some instances, the universal stub application server module 202 can be, in part or in whole, implemented within or configured to operate in conjunction or be integrated with a social networking system (or service), such as a social networking system 630 of FIGURE 6. Likewise, in some instances, the universal stub application server module 202 can be, in part or in whole, implemented within or configured to operate in conjunction or be integrated with a client computing device, such as the user device 610 of FIGURE 6. For example, the universal stub application server module 202 can be implemented as or within a dedicated application (e.g., app), a program, or an applet running on a user computing device or client computing system. It should be understood that many variations are possible.

The data store 220 can be configured to store and maintain various types of data, such as the data relating to support of and operation of the universal stub application server module 202. The data maintained by the data store 220 can include, for example, information relating to universal stub applications, applications, versions of applications, parameters associated with versions of applications, binary files associated with applications or versions of applications, etc. The data store 220 also can maintain other information associated with a social networking system. The information associated with the social networking system can include data about users, social connections, social interactions, locations, geo-fenced areas, maps, places, events, groups, posts, communications, content, account settings, privacy settings, and a social graph. The social graph can reflect all entities of the social networking system and their interactions. As shown in the example system 100, the universal stub application server module 202 can be configured to communicate and/or operate with the data store 220. In some embodiments, the data store 220 can be a data store within a client computing device. In some embodiments, the data store 220 can be a data store of a server system in communication with the client computing device.

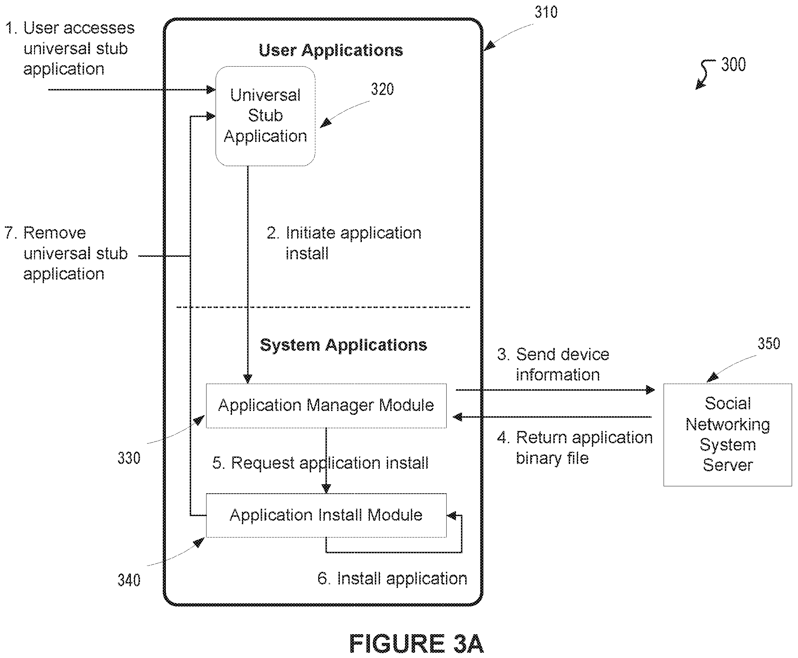

**FIGURE 3A** illustrates an example scenario 300 associated with providing universal stub applications associated with a system, such as a social networking system, according to an embodiment of the present disclosure. The scenario 300 illustrates one example approach for providing the universal stub applications associated with the social networking system. The scenario 300 illustrates a universal stub application 320 for an application associated with the social networking system that is preinstalled on a device 310 of a user. The scenario 300 also illustrates installation of an appropriate version of the application.

At step 1, a user accesses the preinstalled universal stub application 320 on the device 310. For example, the device 310 can be a mobile phone, and the universal stub application 320 can appear as an icon in a user interface of the mobile phone that is selected by the user. The universal stub application 320 can be a user application. At step 2, the universal stub application 320 initiates the application installation process by communicating with an application manager module 330. At step 3, the application manager module 330 sends device information to a social networking system server 350. The social networking system server 350 can determine an appropriate version of the application to install on the device 310 based on the device information. At step 4, the social networking system server 350 returns a binary file for the determined version of the application to the application manager module 330. At step 5, the application manager module 330 provides a request to install the application to an application install module 340 based on the determined version of the application. At step 6, the application install module 340 installs the application based on the determined version of the application. The application install module 340 can execute the binary file provided by the social networking system server 350. The application install module 340 can call functions provided by an API associated with an OS installed on the device 310. At step 7, the application manager module 330 can remove the universal stub application 320 from the device 310. After the installation of the application is complete, the universal stub application 320 can be deleted from the device 310. The application manager module 330 and the application install module 340 can be system applications. All examples herein are provided for illustrative purposes, and there can be many variations and other possibilities. For example, the disclosed technology can be used to install any type of applications associated with any type of system apart from a social networking system, and can be used to install applications on any type of device.

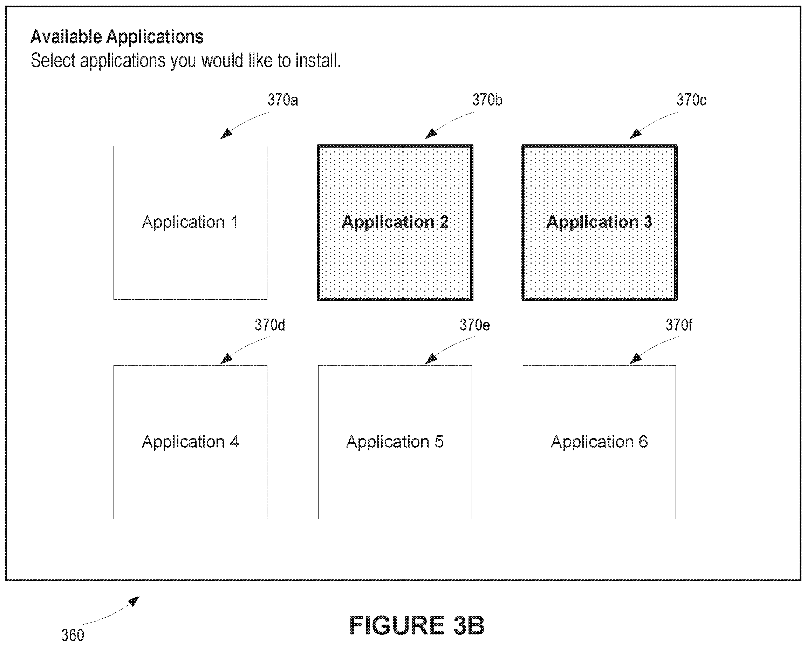

**FIGURE 3B** illustrates an example user interface 360 for providing universal stub applications associated with a system, such as a social networking system, according to an embodiment of the present disclosure. In some embodiments, a universal stub application can be used to install appropriate versions of multiple applications associated with the social networking system. For example, a universal stub application can be preinstalled on a device of a user, and when the universal stub application is accessed, the user can select one or more applications associated with the social networking system to install on the device. The user interface 360 can be displayed when the universal stub application for installing multiple applications is accessed by the user. In the example of FIGURE 3B, the user interface 360 provides six applications associated with the social networking system: Application 1 through Application 6. The user interface 360 can include icons or other indicators for applications that are available for install. In the example of FIGURE 3B, the user interface 360 displays an icon 370a for Application 1, an icon 370b for Application 2, an icon 370c for Application 3, an icon 370d for Application 4, an icon 370e for Application 5, and an icon 370f for Application 6. The user can select one or more icons 370 for applications that the user wants to install. In the example of FIGURE 3B, Application 2 and Application 3 are selected for install, and the icon 370b for Application 2 and the icon 370c for Application 3 are displayed in bold and pattern to indicate that they have been selected. Installation can be requested for the selected applications. Device information can be sent to a server associated with the social networking system, and the server can determine an appropriate version for each of the selected applications based on the device information. All examples herein are provided for illustrative purposes, and there can be many variations and other possibilities. For example, the disclosed technology can be used to install applications associated with any type of system, and can be used to install applications associated with different systems.

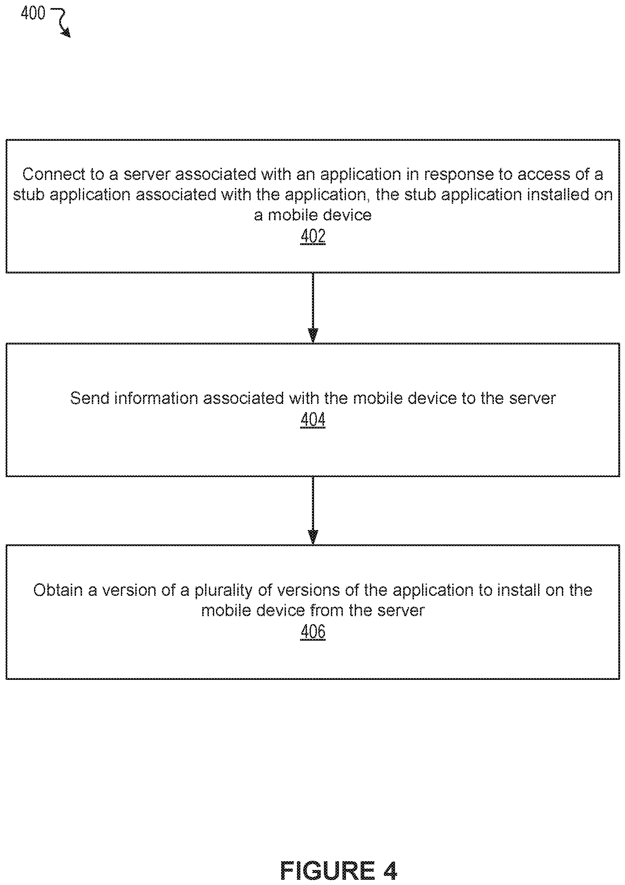

**FIGURE 4** illustrates an example first method 400 for providing universal stub applications associated with a social networking system, according to an embodiment of the present disclosure. It should be understood that there can be additional, fewer, or alternative steps performed in similar or alternative orders, or in parallel, based on the various features and embodiments discussed herein unless otherwise stated.

At block 402, the example method 400 can connect to a server associated with an application in response to access of a stub application associated with the application, the stub application installed on a mobile device. At block 404, the example method 400 can send information associated with the mobile device to the server. At block 406, the example method 400 can obtain a version of a plurality of versions of the application to install on the mobile device from the server. Other suitable techniques that incorporate various features and embodiments of the present disclosure are possible.

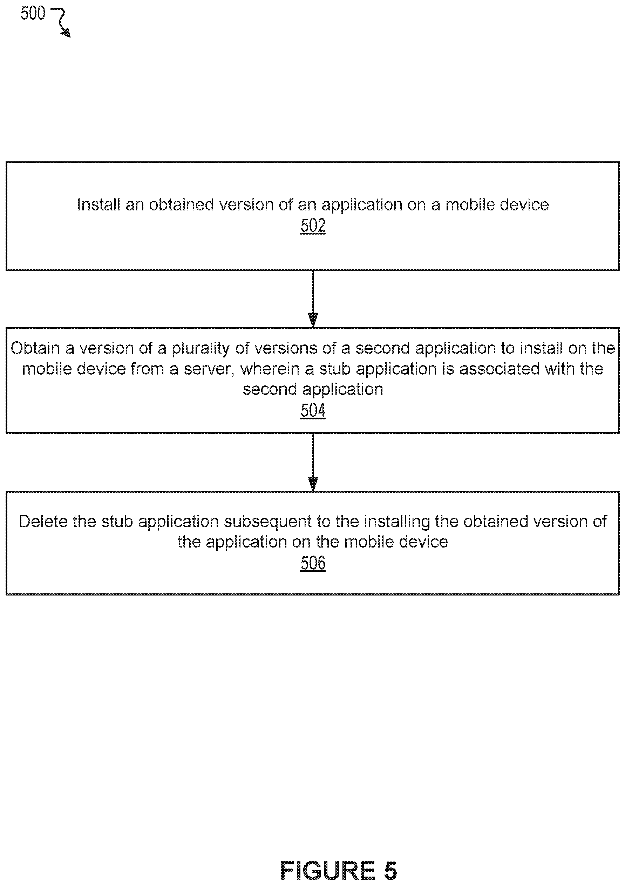

**FIGURE 5** illustrates an example second method 500 for providing universal stub applications associated with a social networking system, according to an embodiment of the present disclosure. It should be understood that there can be additional, fewer, or alternative steps performed in similar or alternative orders, or in parallel, based on the various features and embodiments discussed herein unless otherwise stated. Certain steps of the method 500 may be performed in combination with the example method 400 explained above.

At block 502, the example method 500 can install an obtained version of an application on a mobile device. The obtained version can be similar to the version explained in connection with FIGURE 4. The application can be similar to the application explained in connection with FIGURE 4. The mobile device can be similar to the mobile device explained in connection with FIGURE 4. At block 504, the example method 500 can obtain a version of a plurality of versions of a second application to install on the mobile device from a server, wherein a stub application is associated with the second application. The server can be similar to the server explained in connection with FIGURE 4. The stub application can be similar to the stub application explained in connection with FIGURE 4. At block 506, the example method 500 can delete the stub application subsequent to the installing the obtained version of the application on the mobile device. Other suitable techniques that incorporate various features and embodiments of the present disclosure are possible.

It is contemplated that there can be many other uses, applications, features, possibilities, and/or variations associated with various embodiments of the present disclosure. For example, users can, in some cases, choose whether or not to opt-in to utilize the disclosed technology. The disclosed technology can, for instance, also ensure that various privacy settings, preferences, and configurations are maintained and can prevent private information from being divulged. In another example, various embodiments of the present disclosure can learn, improve, and/or be refined over time.

### SOCIAL NETWORKING SYSTEM - EXAMPLE IMPLEMENTATION

**FIGURE 6** illustrates a network diagram of an example system 600 that can be utilized in various scenarios, in accordance with an embodiment of the present disclosure. The system 600 includes one or more user devices 610, one or more external systems 620, a social networking system (or service) 630, and a network 650. In an embodiment, the social networking service, provider, and/or system discussed in connection with the embodiments described above may be implemented as the social networking system 630. For purposes of illustration, the embodiment of the system 600, shown by FIGURE 6, includes a single external system 620 and a single user device 610. However, in other embodiments, the system 600 may include more user devices 610 and/or more external systems 620. In certain embodiments, the social networking system 630 is operated by a social network provider, whereas the external systems 620 are separate from the social networking system 630 in that they may be operated by different entities. In various embodiments, however, the social networking system 630 and the external systems 620 operate in conjunction to provide social networking services to users (or members) of the social networking system 630. In this sense, the social networking system 630 provides a platform or backbone, which other systems, such as external systems 620, may use to provide social networking services and functionalities to users across the Internet.

The user device 610 comprises one or more computing devices that can receive input from a user and transmit and receive data via the network 650. In one embodiment, the user device 610 is a conventional computer system executing, for example, a Microsoft Windows compatible operating system (OS), Apple OS X, and/or a Linux distribution. In another embodiment, the user device 610 can be a device having computer functionality, such as a smart-phone, a tablet, a personal digital assistant (PDA), a mobile telephone, etc. The user device 610 is configured to communicate via the network 650. The user device 610 can execute an application, for example, a browser application that allows a user of the user device 610 to interact with the social networking system 630. In another embodiment, the user device 610 interacts with the social networking system 630 through an application programming interface (API) provided by the native operating system of the user device 610, such as iOS and ANDROID. The user device 610 is configured to communicate with the external system 620 and the social networking system 630 via the network 650, which may comprise any combination of local area and/or wide area networks, using wired and/or wireless communication systems.

In one embodiment, the network 650 uses standard communications technologies and protocols. Thus, the network 650 can include links using technologies such as Ethernet, 802.11, worldwide interoperability for microwave access (WiMAX), 3G, 4G, CDMA, GSM, LTE, digital subscriber line (DSL), etc. Similarly, the networking protocols used on the network 650 can include multiprotocol label switching (MPLS), transmission control protocol/Internet protocol (TCP/IP), User Datagram Protocol (UDP), hypertext transport protocol (HTTP), simple mail transfer protocol (SMTP), file transfer protocol (FTP), and the like. The data exchanged over the network 650 can be represented using technologies and/or formats including hypertext markup language (HTML) and extensible markup language (XML). In addition, all or some links can be encrypted using conventional encryption technologies such as secure sockets layer (SSL), transport layer security (TLS), and Internet Protocol security (IPsec).

In one embodiment, the user device 610 may display content from the external system 620 and/or from the social networking system 630 by processing a markup language document 614 received from the external system 620 and from the social networking system 630 using a browser application 612. The markup language document 614 identifies content and one or more instructions describing formatting or presentation of the content. By executing the instructions included in the markup language document 614, the browser application 612 displays the identified content using the format or presentation described by the markup language document 614. For example, the markup language document 614 includes instructions for generating and displaying a web page having multiple frames that include text and/or image data retrieved from the external system 620 and the social networking system 630. In various embodiments, the markup language document 614 comprises a data file including extensible markup language (XML) data, extensible hypertext markup language (XHTML) data, or other markup language data. Additionally, the markup language document 614 may include JavaScript Object Notation (JSON) data, JSON with padding (JSONP), and JavaScript data to facilitate data-interchange between the external system 620 and the user device 610. The browser application 612 on the user device 610 may use a JavaScript compiler to decode the markup language document 614.

The markup language document 614 may also include, or link to, applications or application frameworks such as FLASH™ or Unity™ applications, the SilverLight™ application framework, etc.

In one embodiment, the user device 610 also includes one or more cookies 616 including data indicating whether a user of the user device 610 is logged into the social networking system 630, which may enable modification of the data communicated from the social networking system 630 to the user device 610.

The external system 620 includes one or more web servers that include one or more web pages 622a, 622b, which are communicated to the user device 610 using the network 650. The external system 620 is separate from the social networking system 630. For example, the external system 620 is associated with a first domain, while the social networking system 630 is associated with a separate social networking domain. Web pages 622a, 622b, included in the external system 620, comprise markup language documents 614 identifying content and including instructions specifying formatting or presentation of the identified content.

The social networking system 630 includes one or more computing devices for a social network, including a plurality of users, and providing users of the social network with the ability to communicate and interact with other users of the social network. In some instances, the social network can be represented by a graph, i.e., a data structure including edges and nodes. Other data structures can also be used to represent the social network, including but not limited to databases, objects, classes, meta elements, files, or any other data structure. The social networking system 630 may be administered, managed, or controlled by an operator. The operator of the social networking system 630 may be a human being, an automated application, or a series of applications for managing content, regulating policies, and collecting usage metrics within the social networking system 630. Any type of operator may be used.

Users may join the social networking system 630 and then add connections to any number of other users of the social networking system 630 to whom they desire to be connected. As used herein, the term "friend" refers to any other user of the social networking system 630 to whom a user has formed a connection, association, or relationship via the social networking system 630. For example, in an embodiment, if users in the social networking system 630 are represented as nodes in the social graph, the term "friend" can refer to an edge formed between and directly connecting two user nodes.

Connections may be added explicitly by a user or may be automatically created by the social networking system 630 based on common characteristics of the users (e.g., users who are alumni of the same educational institution). For example, a first user specifically selects a particular other user to be a friend. Connections in the social networking system 630 are usually in both directions, but need not be, so the terms "user" and "friend" depend on the frame of reference. Connections between users of the social networking system 630 are usually bilateral ("two-way"), or "mutual," but connections may also be unilateral, or "one-way." For example, if Bob and Joe are both users of the social networking system 630 and connected to each other, Bob and Joe are each other's connections. If, on the other hand, Bob wishes to connect to Joe to view data communicated to the social networking system 630 by Joe, but Joe does not wish to form a mutual connection, a unilateral connection may be established. The connection between users may be a direct connection; however, some embodiments of the social networking system 630 allow the connection to be indirect via one or more levels of connections or degrees of separation.

In addition to establishing and maintaining connections between users and allowing interactions between users, the social networking system 630 provides users with the ability to take actions on various types of items supported by the social networking system 630. These items may include groups or networks (i.e., social networks of people, entities, and concepts) to which users of the social networking system 630 may belong, events or calendar entries in which a user might be interested, computer-based applications that a user may use via the social networking system 630, transactions that allow users to buy or sell items via services provided by or through the social networking system 630, and interactions with advertisements that a user may perform on or off the social networking system 630. These are just a few examples of the items upon which a user may act on the social networking system 630, and many others are possible. A user may interact with anything that is capable of being represented in the social networking system 630 or in the external system 620, separate from the social networking system 630, or coupled to the social networking system 630 via the network 650.

The social networking system 630 is also capable of linking a variety of entities. For example, the social networking system 630 enables users to interact with each other as well as external systems 620 or other entities through an API, a web service, or other communication channels. The social networking system 630 generates and maintains the "social graph" comprising a plurality of nodes interconnected by a plurality of edges. Each node in the social graph may represent an entity that can act on another node and/or that can be acted on by another node. The social graph may include various types of nodes. Examples of types of nodes include users, non-person entities, content items, web pages, groups, activities, messages, concepts, and any other things that can be represented by an object in the social networking system 630. An edge between two nodes in the social graph may represent a particular kind of connection, or association, between the two nodes, which may result from node relationships or from an action that was performed by one of the nodes on the other node. In some cases, the edges between nodes can be weighted. The weight of an edge can represent an attribute associated with the edge, such as a strength of the connection or association between nodes. Different types of edges can be provided with different weights. For example, an edge created when one user "likes" another user may be given one weight, while an edge created when a user befriends another user may be given a different weight.

As an example, when a first user identifies a second user as a friend, an edge in the social graph is generated connecting a node representing the first user and a second node representing the second user. As various nodes relate or interact with each other, the social networking system 630 modifies edges connecting the various nodes to reflect the relationships and interactions.

The social networking system 630 also includes user-generated content, which enhances a user's interactions with the social networking system 630. User-generated content may include anything a user can add, upload, send, or "post" to the social networking system 630. For example, a user communicates posts to the social networking system 630 from a user device 610. Posts may include data such as status updates or other textual data, location information, images such as photos, videos, links, music or other similar data and/or media. Content may also be added to the social networking system 630 by a third party. Content "items" are represented as objects in the social networking system 630. In this way, users of the social networking system 630 are encouraged to communicate with each other by posting text and content items of various types of media through various communication channels. Such communication increases the interaction of users with each other and increases the frequency with which users interact with the social networking system 630.

The social networking system 630 includes a web server 632, an API request server 634, a user profile store 636, a connection store 638, an action logger 640, an activity log 642, and an authorization server 644. In an embodiment of the invention, the social networking system 630 may include additional, fewer, or different components for various applications. Other components, such as network interfaces, security mechanisms, load balancers, failover servers, management and network operations consoles, and the like are not shown so as to not obscure the details of the system.

The user profile store 636 maintains information about user accounts, including biographic, demographic, and other types of descriptive information, such as work experience, educational history, hobbies or preferences, location, and the like that has been declared by users or inferred by the social networking system 630. This information is stored in the user profile store 636 such that each user is uniquely identified. The social networking system 630 also stores data describing one or more connections between different users in the connection store 638. The connection information may indicate users who have similar or common work experience, group memberships, hobbies, or educational history. Additionally, the social networking system 630 includes user-defined connections between different users, allowing users to specify their relationships with other users. For example, user-defined connections allow users to generate relationships with other users that parallel the users' real-life relationships, such as friends, co-workers, partners, and so forth. Users may select from predefined types of connections, or define their own connection types as needed. Connections with other nodes in the social networking system 630, such as non-person entities, buckets, cluster centers, images, interests, pages, external systems, concepts, and the like are also stored in the connection store 638.

The social networking system 630 maintains data about objects with which a user may interact. To maintain this data, the user profile store 636 and the connection store 638 store instances of the corresponding type of objects maintained by the social networking system 630. Each object type has information fields that are suitable for storing information appropriate to the type of object. For example, the user profile store 636 contains data structures with fields suitable for describing a user's account and information related to a user's account. When a new object of a particular type is created, the social networking system 630 initializes a new data structure of the corresponding type, assigns a unique object identifier to it, and begins to add data to the object as needed. This might occur, for example, when a user becomes a user of the social networking system 630, the social networking system 630 generates a new instance of a user profile in the user profile store 636, assigns a unique identifier to the user account, and begins to populate the fields of the user account with information provided by the user.

The connection store 638 includes data structures suitable for describing a user's connections to other users, connections to external systems 620 or connections to other entities. The connection store 638 may also associate a connection type with a user's connections, which may be used in conjunction with the user's privacy setting to regulate access to information about the user. In an embodiment of the invention, the user profile store 636 and the connection store 638 may be implemented as a federated database.

Data stored in the connection store 638, the user profile store 636, and the activity log 642 enables the social networking system 630 to generate the social graph that uses nodes to identify various objects and edges connecting nodes to identify relationships between different objects. For example, if a first user establishes a connection with a second user in the social networking system 630, user accounts of the first user and the second user from the user profile store 636 may act as nodes in the social graph. The connection between the first user and the second user stored by the connection store 638 is an edge between the nodes associated with the first user and the second user. Continuing this example, the second user may then send the first user a message within the social networking system 630. The action of sending the message, which may be stored, is another edge between the two nodes in the social graph representing the first user and the second user. Additionally, the message itself may be identified and included in the social graph as another node connected to the nodes representing the first user and the second user.

In another example, a first user may tag a second user in an image that is maintained by the social networking system 630 (or, alternatively, in an image maintained by another system outside of the social networking system 630). The image may itself be represented as a node in the social networking system 630. This tagging action may create edges between the first user and the second user as well as create an edge between each of the users and the image, which is also a node in the social graph. In yet another example, if a user confirms attending an event, the user and the event are nodes obtained from the user profile store 636, where the attendance of the event is an edge between the nodes that may be retrieved from the activity log 642. By generating and maintaining the social graph, the social networking system 630 includes data describing many different types of objects and the interactions and connections among those objects, providing a rich source of socially relevant information.

The web server 632 links the social networking system 630 to one or more user devices 610 and/or one or more external systems 620 via the network 650. The web server 632 serves web pages, as well as other web-related content, such as Java, JavaScript, Flash, XML, and so forth. The web server 632 may include a mail server or other messaging functionality for receiving and routing messages between the social networking system 630 and one or more user devices 610. The messages can be instant messages, queued messages (e.g., email), text and SMS messages, or any other suitable messaging format.

The API request server 634 allows one or more external systems 620 and user devices 610 to call access information from the social networking system 630 by calling one or more API functions. The API request server 634 may also allow external systems 620 to send information to the social networking system 630 by calling APIs. The external system 620, in one embodiment, sends an API request to the social networking system 630 via the network 650, and the API request server 634 receives the API request. The API request server 634 processes the request by calling an API associated with the API request to generate an appropriate response, which the API request server 634 communicates to the external system 620 via the network 650. For example, responsive to an API request, the API request server 634 collects data associated with a user, such as the user's connections that have logged into the external system 620, and communicates the collected data to the external system 620. In another embodiment, the user device 610 communicates with the social networking system 630 via APIs in the same manner as external systems 620.

The action logger 640 is capable of receiving communications from the web server 632 about user actions on and/or off the social networking system 630. The action logger 640 populates the activity log 642 with information about user actions, enabling the social networking system 630 to discover various actions taken by its users within the social networking system 630 and outside of the social networking system 630. Any action that a particular user takes with respect to another node on the social networking system 630 may be associated with each user's account, through information maintained in the activity log 642 or in a similar database or other data repository. Examples of actions taken by a user within the social networking system 630 that are identified and stored may include, for example, adding a connection to another user, sending a message to another user, reading a message from another user, viewing content associated with another user, attending an event posted by another user, posting an image, attempting to post an image, or other actions interacting with another user or another object. When a user takes an action within the social networking system 630, the action is recorded in the activity log 642. In one embodiment, the social networking system 630 maintains the activity log 642 as a database of entries. When an action is taken within the social networking system 630, an entry for the action is added to the activity log 642. The activity log 642 may be referred to as an action log.

Additionally, user actions may be associated with concepts and actions that occur within an entity outside of the social networking system 630, such as an external system 620 that is separate from the social networking system 630. For example, the action logger 640 may receive data describing a user's interaction with an external system 620 from the web server 632. In this example, the external system 620 reports a user's interaction according to structured actions and objects in the social graph.

Other examples of actions where a user interacts with an external system 620 include a user expressing an interest in an external system 620 or another entity, a user posting a comment to the social networking system 630 that discusses an external system 620 or a web page 622a within the external system 620, a user posting to the social networking system 630 a Uniform Resource Locator (URL) or other identifier associated with an external system 620, a user attending an event associated with an external system 620, or any other action by a user that is related to an external system 620. Thus, the activity log 642 may include actions describing interactions between a user of the social networking system 630 and an external system 620 that is separate from the social networking system 630.

The authorization server 644 enforces one or more privacy settings of the users of the social networking system 630. A privacy setting of a user determines how particular information associated with a user can be shared. The privacy setting comprises the specification of particular information associated with a user and the specification of the entity or entities with whom the information can be shared. Examples of entities with which information can be shared may include other users, applications, external systems 620, or any entity that can potentially access the information. The information that can be shared by a user comprises user account information, such as profile photos, phone numbers associated with the user, user's connections, actions taken by the user such as adding a connection, changing user profile information, and the like.

The privacy setting specification may be provided at different levels of granularity. For example, the privacy setting may identify specific information to be shared with other users; the privacy setting identifies a work phone number or a specific set of related information, such as, personal information including profile photo, home phone number, and status. Alternatively, the privacy setting may apply to all the information associated with the user. The specification of the set of entities that can access particular information can also be specified at various levels of granularity. Various sets of entities with which information can be shared may include, for example, all friends of the user, all friends of friends, all applications, or all external systems 620. One embodiment allows the specification of the set of entities to comprise an enumeration of entities. For example, the user may provide a list of external systems 620 that are allowed to access certain information. Another embodiment allows the specification to comprise a set of entities along with exceptions that are not allowed to access the information. For example, a user may allow all external systems 620 to access the user's work information, but specify a list of external systems 620 that are not allowed to access the work information. Certain embodiments call the list of exceptions that are not allowed to access certain information a "block list". External systems 620 belonging to a block list specified by a user are blocked from accessing the information specified in the privacy setting. Various combinations of granularity of specification of information, and granularity of specification of entities, with which information is shared are possible. For example, all personal information may be shared with friends whereas all work information may be shared with friends of friends.

The authorization server 644 contains logic to determine if certain information associated with a user can be accessed by a user's friends, external systems 620, and/or other applications and entities. The external system 620 may need authorization from the authorization server 644 to access the user's more private and sensitive information, such as the user's work phone number. Based on the user's privacy settings, the authorization server 644 determines if another user, the external system 620, an application, or another entity is allowed to access information associated with the user, including information about actions taken by the user.

In some embodiments, the social networking system 630 can include a universal stub application server module 646. The universal stub application server module 646 can be implemented with the universal stub application server module 202, as discussed in more detail herein. In some embodiments, one or more functionalities of the universal stub application server module 646 can be implemented in the user device 610.

In some embodiments, the user device 610 can include a universal stub application module 618. The universal stub application module 618 can be implemented with the universal stub application module 102, as discussed in more detail herein. In some embodiments, one or more functionalities of the universal stub application module 618 can be implemented in the social networking system 630.

### HARDWARE IMPLEMENTATION

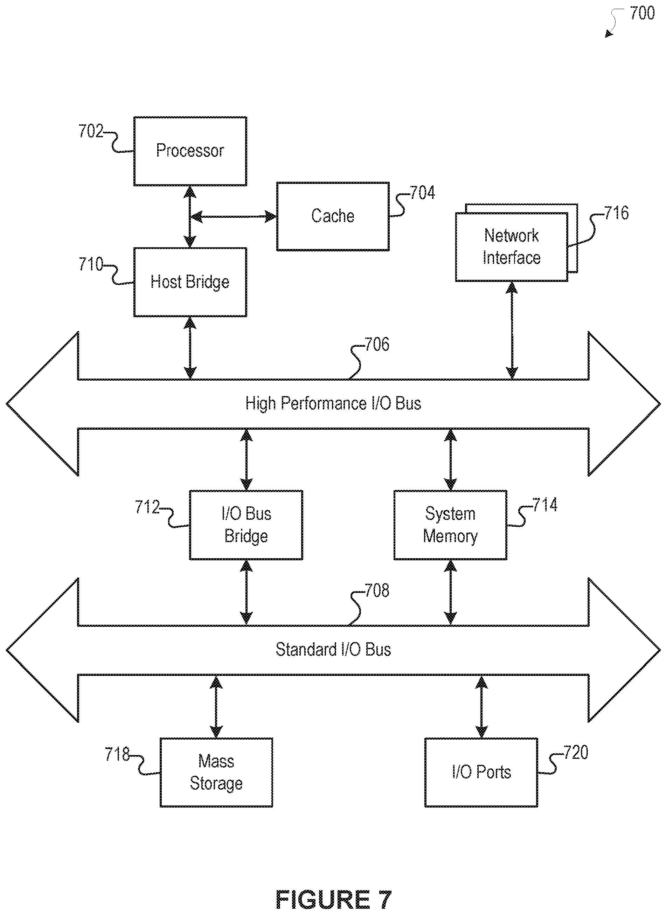

The foregoing processes and features can be implemented by a wide variety of machine and computer system architectures and in a wide variety of network and computing environments. **FIGURE 7** illustrates an example of a computer system 700 that may be used to implement one or more of the embodiments described herein in accordance with an embodiment of the invention. The computer system 700 includes sets of instructions for causing the computer system 700 to perform the processes and features discussed herein. The computer system 700 may be connected (e.g., networked) to other machines. In a networked deployment, the computer system 700 may operate in the capacity of a server machine or a client machine in a client-server network environment, or as a peer machine in a peer-to-peer (or distributed) network environment. In an embodiment of the invention, the computer system 700 may be the social networking system 630, the user device 610, and the external system 720, or a component thereof. In an embodiment of the invention, the computer system 700 may be one server among many that constitutes all or part of the social networking system 630.

The computer system 700 includes a processor 702, a cache 704, and one or more executable modules and drivers, stored on a computer-readable medium, directed to the processes and features described herein. Additionally, the computer system 700 includes a high performance input/output (I/O) bus 706 and a standard I/O bus 708. A host bridge 710 couples processor 702 to high performance I/O bus 706, whereas I/O bus bridge 712 couples the two buses 706 and 708 to each other. A system memory 714 and one or more network interfaces 716 couple to high performance I/O bus 706. The computer system 700 may further include video memory and a display device coupled to the video memory (not shown). Mass storage 718 and I/O ports 720 couple to the standard I/O bus 708. The computer system 700 may optionally include a keyboard and pointing device, a display device, or other input/output devices (not shown) coupled to the standard I/O bus 708. Collectively, these elements are intended to represent a broad category of computer hardware systems, including but not limited to computer systems based on the x86-compatible processors manufactured by Intel Corporation of Santa Clara, California, and the x86-compatible processors manufactured by Advanced Micro Devices (AMD), Inc., of Sunnyvale, California, as well as any other suitable processor.

An operating system manages and controls the operation of the computer system 700, including the input and output of data to and from software applications (not shown). The operating system provides an interface between the software applications being executed on the system and the hardware components of the system. Any suitable operating system may be used, such as the LINUX Operating System, the Apple Macintosh Operating System, available from Apple Computer Inc. of Cupertino, Calif., UNIX operating systems, Microsoft® Windows® operating systems, BSD operating systems, and the like. Other implementations are possible.

The elements of the computer system 700 are described in greater detail below. In particular, the network interface 716 provides communication between the computer system 700 and any of a wide range of networks, such as an Ethernet (e.g., IEEE 802.3) network, a backplane, etc. The mass storage 718 provides permanent storage for the data and programming instructions to perform the above-described processes and features implemented by the respective computing systems identified above, whereas the system memory 714 (e.g., DRAM) provides temporary storage for the data and programming instructions when executed by the processor 702. The I/O ports 720 may be one or more serial and/or parallel communication ports that provide communication between additional peripheral devices, which may be coupled to the computer system 700.

The computer system 700 may include a variety of system architectures, and various components of the computer system 700 may be rearranged. For example, the cache 704 may be on-chip with processor 702. Alternatively, the cache 704 and the processor 702 may be packed together as a "processor module", with processor 702 being referred to as the "processor core". Furthermore, certain embodiments of the invention may neither require nor include all of the above components. For example, peripheral devices coupled to the standard I/O bus 708 may couple to the high performance I/O bus 706. In addition, in some embodiments, only a single bus may exist, with the components of the computer system 700 being coupled to the single bus. Moreover, the computer system 700 may include additional components, such as additional processors, storage devices, or memories.

In general, the processes and features described herein may be implemented as part of an operating system or a specific application, component, program, object, module, or series of instructions referred to as "programs". For example, one or more programs may be used to execute specific processes described herein. The programs typically comprise one or more instructions in various memory and storage devices in the computer system 700 that, when read and executed by one or more processors, cause the computer system 700 to perform operations to execute the processes and features described herein. The processes and features described herein may be implemented in software, firmware, hardware (e.g., an application specific integrated circuit), or any combination thereof.

In one implementation, the processes and features described herein are implemented as a series of executable modules run by the computer system 700, individually or collectively in a distributed computing environment. The foregoing modules may be realized by hardware, executable modules stored on a computer-readable medium (or machine-readable medium), or a combination of both. For example, the modules may comprise a plurality or series of instructions to be executed by a processor in a hardware system, such as the processor 702. Initially, the series of instructions may be stored on a storage device, such as the mass storage 718. However, the series of instructions can be stored on any suitable computer readable storage medium. Furthermore, the series of instructions need not be stored locally, and could be received from a remote storage device, such as a server on a network, via the network interface 716. The instructions are copied from the storage device, such as the mass storage 718, into the system memory 714 and then accessed and executed by the processor 702. In various implementations, a module or modules can be executed by a processor or multiple processors in one or multiple locations, such as multiple servers in a parallel processing environment.

Examples of computer-readable media include, but are not limited to, recordable type media such as volatile and non-volatile memory devices; solid state memories; floppy and other removable disks; hard disk drives; magnetic media; optical disks (e.g., Compact Disk Read-Only Memory (CD ROMS), Digital Versatile Disks (DVDs)); other similar non-transitory (or transitory), tangible (or non-tangible) storage medium; or any type of medium suitable for storing, encoding, or carrying a series of instructions for execution by the computer system 700 to perform any one or more of the processes and features described herein.

For purposes of explanation, numerous specific details are set forth in order to provide a thorough understanding of the description. It will be apparent, however, to one skilled in the art that embodiments of the disclosure can be practiced without these specific details. In some instances, modules, structures, processes, features, and devices are shown in block diagram form in order to avoid obscuring the description. In other instances, functional block diagrams and flow diagrams are shown to represent data and logic flows. The components of block diagrams and flow diagrams (e.g., modules, blocks, structures, devices, features, etc.) may be variously combined, separated, removed, reordered, and replaced in a manner other than as expressly described and depicted herein.

Reference in this specification to "one embodiment", "an embodiment", "other embodiments", "one series of embodiments", "some embodiments", "various embodiments", or the like means that a particular feature, design, structure, or characteristic described in connection with the embodiment is included in at least one embodiment of the disclosure. The appearances of, for example, the phrase "in one embodiment" or "in an embodiment" in various places in the specification are not necessarily all referring to the same embodiment, nor are separate or alternative embodiments mutually exclusive of other embodiments. Moreover, whether or not there is express reference to an "embodiment" or the like, various features are described, which may be variously combined and included in some embodiments, but also variously omitted in other embodiments. Similarly, various features are described that may be preferences or requirements for some embodiments, but not other embodiments.

The language used herein has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

## Claims

1. A computer-implemented method comprising:
by a computing system (600) comprising one or more user devices (610), one or more external systems (620), a social networking system 630, and a network (650), connecting to a server associated with an application in response to access of a stub application (320) associated with the application, the stub application installed on a mobile device (310);
sending, by the computing system, device information associated with the mobile device to a universal stub application server module of the server, the universal stub application server module including an application version determination module (204) and an application version parameter module (206), the device information including information relating to one or more of: a memory, a processor, a display, a storage, a network connection, a language, a geographical region, a model, and a manufacturer;
specifying and managing, by the application version parameter module (206), parameters for different versions of a plurality of versions of the application, each version of the application having one or more of said parameters associated with it, the parameters relating to one or more of: a memory, a processor, a display, a storage, a network connection, a language, a geographical region, a model, and a manufacturer;
comparing, by the application version determination module (204), the device information with the parameters associated with the plurality of versions of the application;
determining, by the application version determination module (204) , based on the comparison, a version of the plurality of versions of the application to install on the mobile device; and
obtaining, by the computing system, the version of the plurality of versions of the application to install on the mobile device from the server.

2. The computer-implemented method of claim 1, further comprising installing the obtained version of the application on the mobile device (310).

3. The computer-implemented method of claim 2, further comprising deleting the stub application (320) subsequent to the installing the obtained version of the application on the mobile device (310).

4. The computer-implemented method of claim 1, wherein the obtained version of the application is a binary file.

5. The computer-implemented method of claim 1, wherein the information associated with the mobile device (310) is obtained based on an application programming interface (API).

6. The computer-implemented method of claim 5, wherein the information associated with the mobile device (310) is obtained from an operating system (OS) installed on the mobile device.

7. The computer-implemented method of claim 1, wherein the stub application (320) is represented as an icon in a user interface (360) displayed on the mobile device (310).

8. The computer-implemented method of claim 1, further comprising obtaining a version of a plurality of versions of a second application to install on the mobile device (310) from the server, wherein the stub application (320) is associated with the second application.

9. The computer-implemented method of claim 1, wherein the application is associated with a social networking system.

10. A system comprising:
at least one hardware processor; and
a memory storing instructions that, when executed by the at least one processor, cause the system to perform a method of any of claims 1 to 9.

11. A non-transitory computer readable medium including instructions that, when executed by at least one hardware processor of a computing system, cause the system to perform a method of any of claims 1 to 9.

## Patentansprüche

1. Ein computerimplementiertes Verfahren, das Folgendes beinhaltet:
durch ein Rechensystem (600), das eine oder mehrere Benutzervorrichtungen (610), ein oder mehrere externe Systeme (620), ein System eines sozialen Netzwerks (630) und ein Netzwerk (650) beinhaltet, Verbinden mit einem Server, der mit einer Anwendung assoziiert ist, als Reaktion auf Zugriff auf eine Stub-Anwendung (320), die mit der Anwendung assoziiert ist, wobei die Stub-Anwendung auf einer mobilen Vorrichtung (310) installiert ist;
Senden, durch das Rechensystem, von Vorrichtungsinformationen, die mit der mobilen Vorrichtung assoziiert sind, an ein universelles Stub-Anwendungsservermodul des Servers, wobei das universelle Stub-Anwendungsservermodul ein Anwendungsversionsbestimmungsmodul (204) und ein Anwendungsversionsparametermodul (206) umfasst, wobei die Vorrichtungsinformationen Informationen umfassen, die sich auf eines oder mehrere der folgenden beziehen: einen Datenspeicher, einen Prozessor, eine Anzeige, einen Speicher, eine Netzwerkverbindung, eine Sprache, einen geographischen Bereich, ein Modell und einen Hersteller;
Spezifizieren und Verwalten, durch das Anwendungsversionsparametermodul (206), von Parametern für unterschiedliche Versionen einer Vielzahl von Versionen der Anwendung, wobei jede Version der Anwendung einen oder mehrere der Parameter, die damit assoziiert sind, aufweist, wobei sich die Parameter auf eines oder mehrere der folgenden beziehen: einen Datenspeicher, einen Prozessor, eine Anzeige, einen Speicher, eine Netzwerkverbindung, eine Sprache, einen geographischen Bereich, ein Modell und einen Hersteller;
Vergleichen, durch das Anwendungsversionsbestimmungsmodul (204), der Vorrichtungsinformationen mit den Parametern, die mit der Vielzahl von Versionen der Anwendung assoziiert sind;
Bestimmen, durch das Anwendungsversionsbestimmungsmodul (204) basierend auf dem Vergleich, einer Version der Vielzahl von Versionen der Anwendung, die auf der mobilen Vorrichtung installiert werden soll; und
Erhalten, durch das Rechensystem, der Version der Vielzahl von Versionen der Anwendung, die auf der mobilen Vorrichtung installiert werden soll, von dem Server.

2. Computerimplementiertes Verfahren gemäß Anspruch 1, das ferner das Installieren der erhaltenen Version der Anwendung auf der mobilen Vorrichtung (310) beinhaltet.

3. Computerimplementiertes Verfahren gemäß Anspruch 2, das ferner das Löschen der Stub-Anwendung (320) folgend auf das Installieren der erhaltenen Version der Anwendung auf der mobilen Vorrichtung (310) beinhaltet.

4. Computerimplementiertes Verfahren gemäß Anspruch 1, wobei die erhaltene Version der Anwendung eine Binärdatei ist.

5. Computerimplementiertes Verfahren gemäß Anspruch 1, wobei die Informationen, die mit der mobilen Vorrichtung (310) assoziiert sind, basierend auf einer Anwendungsprogrammierschnittstelle (API) erhalten werden.

6. Computerimplementiertes Verfahren gemäß Anspruch 5, wobei die Informationen, die mit der mobilen Vorrichtung (310) assoziiert sind, von einem Betriebssystem (OS), das auf der mobilen Vorrichtung installiert ist, erhalten werden.

7. Computerimplementiertes Verfahren gemäß Anspruch 1, wobei die Stub-Anwendung (320) als ein Piktogramm in einer Benutzerschnittstelle (360), die auf der mobilen Vorrichtung (310) angezeigt wird, dargestellt wird.

8. Computerimplementiertes Verfahren gemäß Anspruch 1, das ferner das Erhalten einer Version einer Vielzahl von Versionen einer zweiten Anwendung, die auf der mobilen Vorrichtung (310) installiert werden soll, von dem Server beinhaltet, wobei die Stub-Anwendung (320) mit der zweiten Anwendung assoziiert ist.

9. Computerimplementiertes Verfahren gemäß Anspruch 1, wobei die Anwendung mit einem System eines sozialen Netzwerks assoziiert ist.

10. Ein System, das Folgendes beinhaltet:
mindestens einen Hardware-Prozessor; und
einen Datenspeicher, der Anweisungen speichert, die, wenn sie durch den mindestens einen Prozessor ausgeführt werden, bewirken, dass das System ein Verfahren gemäß einem der Ansprüche 1 bis 9 durchführt.

11. Ein nicht transitorisches computerlesbares Medium, das Anweisungen umfasst, die, wenn sie durch mindestens einen Hardware-Prozessor eines Rechensystems ausgeführt werden, bewirken, dass das System ein Verfahren gemäß einem der Ansprüche 1 bis 9 durchführt.

## Revendications

1. Un procédé mis en œuvre par ordinateur comprenant :
par un système informatique (600) comprenant un ou plusieurs dispositifs utilisateur (610), un ou plusieurs systèmes externes (620), un système de réseautage social (630), et un réseau (650), la connexion à un serveur associé à une application en réponse à l'accès d'une application d'élément de remplacement (*stub*) (320) associée à l'application, l'application d'élément de remplacement étant installée sur un dispositif mobile (310) ;
l'envoi, par le système informatique, d'informations de dispositif associées au dispositif mobile à un module de serveur d'application d'élément de remplacement universelle du serveur, le module de serveur d'application d'élément de remplacement universelle incluant un module de détermination de version d'application (204) et un module de paramètres de versions d'application (206), les informations de dispositif incluant des informations ayant trait à un ou plusieurs éléments parmi : une mémoire, un processeur, un écran, un stockage, une connexion réseau, une langue, une région géographique, un modèle, et un fabriquant ;
la spécification et la gestion, par le module de paramètres de versions d'application (206), de paramètres pour des versions différentes d'une pluralité de versions de l'application, chaque version de l'application ayant un ou plusieurs desdits paramètres associés à celle-ci, les paramètres ayant trait à un ou plusieurs éléments parmi : une mémoire, un processeur, un écran, un stockage, une connexion réseau, une langue, une région géographique, un modèle, et un fabriquant ;
la comparaison, par le module de détermination de version d'application (204), des informations de dispositif avec les paramètres associés à la pluralité de versions de l'application ;
la détermination, par le module de détermination de version d'application (204), sur la base de la comparaison, d'une version de la pluralité de versions de l'application à installer sur le dispositif mobile ; et
l'obtention, par le système informatique, de la version de la pluralité de versions de l'application à installer sur le dispositif mobile à partir du serveur.

2. Le procédé mis en œuvre par ordinateur de la revendication 1, comprenant en outre l'installation de la version obtenue de l'application sur le dispositif mobile (310).

3. Le procédé mis en œuvre par ordinateur de la revendication 2, comprenant en outre la suppression de l'application d'élément de remplacement (320) à la suite de l'installation de la version obtenue de l'application sur le dispositif mobile (310).

4. Le procédé mis en œuvre par ordinateur de la revendication 1, dans lequel la version obtenue de l'application est un fichier binaire.

5. Le procédé mis en œuvre par ordinateur de la revendication 1, dans lequel les informations associées au dispositif mobile (310) sont obtenues sur la base d'une interface de programmation d'application (API).

6. Le procédé mis en œuvre par ordinateur de la revendication 5, dans lequel les informations associées au dispositif mobile (310) sont obtenues à partir d'un système d'exploitation (OS) installé sur le dispositif mobile.

7. Le procédé mis en œuvre par ordinateur de la revendication 1, dans lequel l'application d'élément de remplacement (320) est représentée sous la forme d'une icône dans une interface utilisateur (360) affichée sur le dispositif mobile (310).

8. Le procédé mis en œuvre par ordinateur de la revendication 1, comprenant en outre l'obtention d'une version d'une pluralité de versions d'une deuxième application à installer sur le dispositif mobile (310) à partir du serveur, dans lequel l'application d'élément de remplacement (320) est associée à la deuxième application.

9. Le procédé mis en œuvre par ordinateur de la revendication 1, dans lequel l'application est associée à un système de réseautage social.

10. Un système comprenant :
au moins un processeur matériel ; et
une mémoire stockant des instructions qui, lorsqu'elles sont exécutées par l'au moins un processeur, amènent le système à réaliser un procédé de n'importe lesquelles des revendications 1 à 9.

11. Un support lisible par ordinateur non transitoire incluant des instructions qui, lorsqu'elles sont exécutées par au moins un processeur matériel d'un système informatique, amènent le système à réaliser un procédé de n'importe lesquelles des revendications 1 à 9.
